# EUROPEAN PATENT APPLICATION

(11) **EP 3 748 253 A1**
(43) Date of publication of application: **09.12.2020**
(21) Application number: 19178057.6
(22) Date of filing: 04.06.2019
(51) Int. Cl.: F24S 20/40, F24S 70/225

(54) **SYSTEM AND METHOD FOR ENERGY HARVESTING**

(71) Applicant: Nederlandse Organisatie voor toegepast- natuurwetenschappelijk Onderzoek TNO, 2595 DA 's-Gravenhage (NL)
(72) Inventor: Erich, Sebastiaan Joannes Franciscus, 2595 DA 's-Gravenhage (NL); Van Leeuwen, Sanne Lin, 2595 DA 's-Gravenhage (NL); Van Riessen, Gerrit Jan, 2595 DA 's-Gravenhage (NL); Weggeman, Hendrik Jan, 2595 DA 's-Gravenhage (NL)
(74) Representative: V.O.

(57) **Abstract**

System for energy harvesting including:
-at least one heat collector (1), e.g. solar collector, configured to be installed onto, in or near a fixed structure for collecting incoming heat;
-a heat reservoir (H) configured for storing heat;
-a cooling medium low temperature reservoir (C) for holding a liquid cooling medium,
-a heat pump (5) configured for transferring heat from the cooling medium low temperature reservoir (C) to the heat reservoir (H); and
-a cooling medium transfer circuit (2) for circulating liquid cooling medium between the at least one heat collector (1) and the low temperature reservoir (C).

The invention also provides a method for energy harvesting, as well as innovative use of a heat collector.

## Description

The invention relates to a system for energy harvesting including at least one heat collector, e.g. solar collector, configured to be installed onto, in or near a fixed structure for collecting incoming heat.

Such a system is known from the prior art, see for example EP0330701. The known system includes a heat collector (or solar heat collector) comprising a plurality of heat collector elements, each heat collector element having at least one thermal media tube running allowing thermal media to pass through the inside, and sheet-form heat collector fins connected to opposite sides of the thermal media tube for transferring heat, connector tubes for connecting the thermal media tubes of different heat collector elements to each other and to a heat collector driver system, and - a support means for supporting said heat collector elements. The heat collector elements are constructed as parts which are normally used to build a house.

In an embodiment EP0330701 discloses a solar heat collector system that makes up a heat-pump system heat collector circuit by sequentially connecting a compressor that compresses and outputs heating media, a condensor connected to the output of the compressor, an expansion valve concurrently functioning as a squeezer, and the heat collector that also concurrently functions as an evaporator, respectively. In addition, this system also incorporates a fluid heating circuit by connecting a hot-water pool storing fluid for delivery to the hot-water supply unit and air-conditioners, and a fluid heater installed in a position outside the hot-water pool via a circulation pump and connected to the condensor with which the heat-exchange relationship is formed.

A problem of known systems is that the heat (solar) collectors have a relatively unattractive appearance. Attaching or including aesthetic unpleasant solar collectors to buildings (e.g. housing) is undesired. Even though, improving energy efficiency of housing is crucial in view of scarcity of fossil energy fuels and ecological impact of energy consumption. This in view of achieving the European goal of an energy neutral built environment in 2050, which requires harvesting and storage of solar energy to be optimized.

Decentralized heat storage and collection is considered an indispensable element to facilitate the desired flexibility in the energy system and realize the global energy ambitions. To achieve that goal it is desired that thermal collection and thermal storage should be compact and easy to be installed. Renovating the currently existing building stock (approximately 85% of the present dwellings was built before 1990 with poor insulation (R =< 1.6 m2K/W)) will take place in the upcoming period.

The present invention aims to improve the energy harvesting system. In particular, the invention aims to provide an energy harvesting system that is more efficient than known systems, preferably throughout long operational periods (including a summer and winter period). Also, the invention aims to provide a system that is easy and efficient to install onto and/or into and/or near existing buildings. Furthermore, an aim of the invention is to provide a system that is aesthetic improved.

In order to solve or alleviate one or more of the above problems, the invention provides a system that is characterized by the features of claim 1.

According to an aspect there is provided a system for energy harvesting including at least one heat collector , e.g. solar collector, configured to be installed onto, in or near a fixed structure for collecting incoming heat, the system including:
- a heat reservoir configured for storing heat;
- a low temperature reservoir for holding a liquid cooling medium,
- a heat pump configured for transferring heat from the low temperature reservoir to the heat reservoir; and
- a cooling medium transfer circuit for circulating liquid cooling medium between the at least one heat collector and the low temperature reservoir.

In this way an efficient energy harvesting system is obtained, based on an active cooling of the heat collector.

During operation, each heat collector can be installed onto, in or near a fixed structure, e.g. a building, housing or the like. In an embodiment, one or more of the at least one heat collector can be mounted onto a horizontal wall, a vertical wall or a sloped wall, and in particular at or on an outside of the fixed structure (facing ambient outside air). Additionally or alternatively, one or a plurality of the heat collectors can be mounted onto a roof of the fixed structure (again: on an outside of the fixed structure). In case of a plurality of heat collectors is preferred that the heat collectors are interconnected for exchanging collected heat, that is, that they are all connected to the same heat transfer circuit for transferring heat from the heat collectors to the low temperature reservoir.

Ambient incoming heat (e.g. solar radiation heat and/or environmental heat of ambient air, present at and/or flowing towards the at least one heat collector) is collected by the (actively cooled) heat collector. By actively cooling the heat collector below the external temperature, heat can be collected even in absence of the sun, using heat exchange with air and a net thermal radiative input on the panel. In presence of the sun (i.e. when sun light directly illuminates the collector) the solar influx (which can reach 1000 W/m2) can heat the panels, so that a maximum amount of energy can be harvested. Again this heat harvesting can be optimized by actively cooling the surface of the collectors.

The heat is transferred from the heat collector(s) via the cooling medium transfer circuit to the low temperature reservoir. It is preferred that the low temperature reservoir is installed in or near the fixed structure, and that the low temperature reservoir is configured to store a relatively large amount of heat. On the other hand, it is desired that the of the (liquid cooling medium) low temperature reservoir is relatively compact, allowing ease and efficiency of installation (as will be explained below).

With great advantage the heat pump is operable to transfer heat from the cooling medium low temperature reservoir to the heat reservoir, from which it can be used e.g. downstream for further heating purposes such as interior space heating and/or (tap) water heating. Thus, during operation, the heat pump provides cooling of the cooling medium, in order to cool the heat collector(s). In addition, the temperature of/in the heat reservoir (in particular of a heating medium held in that reservoir) can be held at a significantly higher than a temperature of/in the low temperature reservoir (in particular a temperature of the liquid cooling medium, held in that reservoir). It follows that the low temperature reservoir is used as a coolant reservoir, for cooling the at least one heat collector. Similarly, the heat pump can be operable to maintain the low temperature reservoir at or below a desired or predetermined maximum temperature. In a preferred embodiment, a liquid to liquid (e.g. water to water) heat pump (know as such to the skilled person) is used.

By using a liquid for transporting heat from the heat collector to the low temperature reservoir (and for cooling the heat collector), relatively high cooling capacity can be achieved, wherein high thermal fluctuations can be avoided or reduced. As a result, reliable, maximized and efficient energy harvesting can be achieved, in particular during day and night, summer and winter. More particular, in this way, good heat collection can be achieved during relatively cold environmental circumstance, e.g. during winter (e.g. when an ambient temperature at the fixed structure is about 0 °C, or even lower).

Said heat reservoir and low temperature reservoir can have various temperatures. In particular, during operation, the temperature of the heat reservoir (in particular of a heating medium held therein) is higher than a temperature of the low temperature reservoir (i.e. of a low temperature medium held therein). For example, during operation, a temperature of the heat reservoir can be in the range of 30 °C to 95 °C, in particular 45 °C to 65 °C. Further, for example, during operation, a temperature of the low temperature reservoir can be in the range of -20 °C to +65 °C, in particular - 10 °C to + 20 °C

Each of the at least one heat collectors can have various configurations, as will be explained in the following.

According to a preferred embodiment, the heat collector can be or consist of an (aesthetically pleasant) prefab façade panel, e.g. with an integrated solar collector, configured to be easily installed at or on the fixed structure.

According to a highly preferred embodiment, the heat collector includes a heat collecting surface which is provided with a NIR (near-infrared) absorbing layer, for example a NIR absorbing coating. The heat absorbing layer can e.g. be provided onto a heat conducting substrate, e.g. a metal plate, the metal e.g. being aluminum or copper (wherein the above-mentioned heat transfer circuit can include a section that is integrated with or connected to the heat conducting substrate).

It has been found that in this way, significant system efficiency, providing improved heat collecting power, can be achieved.

One or more heat absorbing layers (in particular one or more NIR absorbing layers/coatings) can be included in the heat collector.

As about 50% of solar radiation energy is in the visible region of the spectrum (wavelength of 0.40 to 0.70 µm), 3% in the ultraviolet (UV) spectral region (wavelength of <0.40 µm), and 47% in the near infrared (NIR) region of the spectrum (wavelength of 0.70 µm to 2500 µm).

Some materials absorb more solar energy depending on their color. For example, black materials obtain a higher temperature in the sun than light (coated) materials. Light colored coatings that absorb a high amount of solar energy are not readily available on the market. Most white coatings contain titanium dioxide that scatters NIR radiation, which makes light colored objects inefficient NIR absorbers. According to a preferred embodiment, one or more NIR absorbers (e.g. NIR absorbing compounds and/or NIR absorbing particles) are added to or included in a light-colored coating (e.g. a coating that does contain titanium dioxide), for enhancing the efficiency in the NIR absorbance, wherein the resulting coating is used in/on the heat collector (as heat absorbing layer).

According to a further embodiment, for aesthetic reasons, adding an NIR absorber (e.g. NIR absorbing compound and/or NIR absorbing particles) to the coating of the heat collector does not substantially change the color of the coating (of the heat collector). In other words, the NIR absorber has no or only a limited effect on the color of the coating. A further advantage is that in this way, the NIR absorber can be added to the coating of the heat collector without influencing the color, allowing a wide range of colors.

According to a further embodiment, one or more of several options are implemented to optimize the coating's NIR absorbance. For example, the NIR absorber of the coating may include one or more oxides. In particular, with the help of all kind of oxides (mostly in the form of nano- and/or micrometer sized particles) the absorption can be optimized. For example, mixed-metal oxides can be mixed with the coating. Not only metal oxides are options, but also NIR absorbing organic compounds or chelates may be used as part of the coating, to optimize the NIR absorption of the coating.

Also, preferably, the NIR (near-infrared) absorbing layer is a colored layer, e.g. including one or more color pigments (e.g. titanium dioxide), to provide an aesthetically pleasing appearance to the collector (other than the know black appearance of solar panels). For example, the color can be selected from blue, red, green, yellow, white, and/or any other (non-black) color that is visible to the naked eye.

In a further embodiment, an externally facing side of the heat collector has a substantially white color (e.g. RAL9010), wherein the collector is configured for providing a solar absorption of at least about 40%, and preferably at least about 50%. In a further embodiment, an externally facing side of the heat collector has a substantially red color, wherein the collector is configured for providing a solar absorption of at least about 80%, and preferably at least about 90%. It has been found that such relatively high solar heat absorption percentages can be achieved by application of a colored NIR-absorbing layer (e.g. coating) including one or more NIR-absorbers (e.g. including one or more of NIR absorbing nanoparticles, NIR absorbing microparticles, mixed metal oxides (MMO), organic compounds and/or chelates).

As will be appreciated by the skilled person, RAL concerns the commonly used "Reichs-Ausschuß fur Lieferbedingungen" color standard, administrated by the German RAL GmbH.

Mounting of the at least one heat collector can be achieved in various ways. Preferably, the heat collector is part of a prefab panel, that includes a mounting structure (e.g. clamping means, engagement means, suspension means) for mounting the panel to the fixed structure.

According to a preferred embodiment, the heat transfer circuit includes a cooling medium duct structure for circulating the liquid cooling medium between the at least one heat collector and the low temperature reservoir.

According to a further embodiment, the heat pump is a liquid to liquid heat pump, having cooling liquid entry and exit ports for receiving and discharging cooling liquid, and having heating liquid entry and exit ports for receiving and discharging heating liquid, the heat pump configured for transferring heat from the cooling liquid received via the cooling liquid entry port to heating liquid received via the heating liquid entry port utilizing heat pump means, in particular an integrated compressor-condenser-evaporator system.

Thus, the heat pump can be a substantially closed system, utilizing or including e.g. a relatively small amount heat transport fluid (preferably being optimized for heat pump operation). Also, preferably, liquids consisting or mainly including water are used as cooling liquid (to be cooled by the heat pump) and heating liquid (to be heated by the heat pump) The low temperature reservoir and heat reservoir can both provided relatively large heat storage volumes for buffering and storing harvested heat, e.g. using respective fluids that are optimized for cooling and/or heat storage.

According to a further, extra advantageous embodiment, the system can include a secondary heat transport medium duct structure arranged for (directly) circulating a heat transport medium between the at least one heat collector and the heat reservoir.

The secondary heat transport medium duct structure can function as a by-pass for bypassing the heat pump, to provide direct heat transfer to (and from) the heat reservoir. A respective secondary fluid pump can be available for circulating the secondary heat transport, wherein a heat exchanger can be installed in the heat reservoir for exchange of heat between the secondary heat transport medium duct structure and that reservoir. Thus, the heat collector can also be used to harvest energy in a conventional way, e.g. in case the heat pump is inactive, or during maintenance of the heat pump, and/or dependent on a temperature of the heat collector, and/or a temperature of the low temperature reservoir. For example, when a temperature of the heat collector is higher than a temperature of (in) the heat reservoir, the secondary heat transport medium duct structure can be used in addition to the heat pump, for removing heat from the heat collector.

In a preferred embodiment, the low temperature reservoir holds a liquid cooling medium including or consisting of water, for example a mixture of water and at least one anti-freeze agent (for example glycol and/or a salt).

It has been found that in this way, good energy harvesting results, providing a relatively high COP (Coefficient Of Performance), can be achieved. This can be achieved by maximizing the solar gains, providing higher COP's than conventional air-heat pumps. By using NIR harvesting coatings this effect is greatly enhanced.

According to a preferred embodiment, the low temperature reservoir has a buffer medium (i.e. liquid cooling medium) volume of at least 0.1 m³, for example a volume of at least 1 m³, e.g. a volume in the range of about 1 - 10 m³.

Such a relatively small low temperature reservoir can be installed in various locations in or at the fixed structure, for example integrated in a wall of the structure, or below a floor (e.g. below a ground level) of the fixed structure. Besides, the low temperature reservoir can be provided by e.g. a single liquid storage vessel, a pool, a duct or duct system or the-like. It is preferred that the low temperature reservoir is located within the fixed structure, but that is not required.

Preferably, the heat reservoir is a reservoir holding a heat storage medium, for example mainly including or consisting of water.

Also, according to a preferred embodiment a volume of the heat storage medium reservoir is at least 0.1 m³, for example a volume of at least 1 m³, preferable a volume in the range of about 1 - 10 m³.

Such a relatively small heat reservoir can also be installed in various locations in or at the fixed structure, for example integrated in a wall of the structure, or below a floor (e.g. below a ground level) of the fixed structure. It is preferred that the heat reservoir is located within the fixed structure, but that is not required.

According to a highly preferred aspect, the heat pump and/or the at least one heat collector includes or is connectable to a secondary cooling circuit for cooling an area remote from the at least one heat collector (the area to be cooled e.g. being an interior space of the fixed structure).

In this way, the system can further be used for local area cooling in case of cooling demand (e.g. during summer). Active cooling of the area can be achieved via the heat pump. However, additionally or alternatively, the heat collector itself is used as a cooling device, e.g. during nighttime (when ambient air has a relatively low temperature, e.g. lower than a temperature of the area that is to be cooled). In such an embodiment the collector can directly feed cooling elements (e.g. radiators etc.) inside the interior space.

In particular, the low temperature reservoir can be used for providing a (heat) connection between the heat pump and the area remote from the at least one heat collector

For example, the heat pump can be operable (directly, or indirectly via the low temperature reservoir) for cooling one or more interior spaced of the fixed structure, e.g. as or via an air conditioner.

According to an embodiment, the system can include a heat transport circuit for transporting heat during a first predetermined energy harvesting period, for example during summer, towards a subterranean heat reservoir, wherein the system is configured to reduce or stop transporting heat via the heat transport circuit to the heat reservoir during a second predetermined energy harvesting period, for example during winter.

In this way, more efficient and improved energy harvesting can be achieved. The subterranean heat reservoir can be used as an additional heat reservoir. The subterranean heat reservoir can be connected to another (different) heat transport circuit for removing heat therefrom, e.g. for heating the interior of a building and/or for heating tap water. The system can achieve balancing of that subterranean heat reservoir.

Further, the invention provides a method for energy harvesting including:
- arranging at least one heat collector, e.g. solar heat collector, onto or in front of a fixed heat receiving structure;
- circulating a liquid cooling medium with the heat collector;
- actively cooling the liquid cooling medium by removing heat therefrom; and
- transporting and/or storing the removed heat in a heat reservoir (H).

In this way, above-mentioned advantages can be achieved.

According to a further embodiment, the liquid cooling medium is cooled by transferring heat therefrom to a cooled low temperature reservoir, wherein heat is removed from the low temperature reservoir and transferred to the heat reservoir in order to cool the low temperature reservoir.

Furthermore, an extra advantageous aspect of the invention provides a method for renovating a fixed structure, for example a building, for example utilizing a system according to the invention, the method including:
- arranging at least one heat collector, e.g. solar collector, onto, in or near the fixed structure for collecting incoming heat;
- arranging a low temperature reservoir at, in or near the fixed structure, the low temperature reservoir holding a buffer medium;
- providing a heat transfer circuit for transferring heat from the at least one heat collector to the low temperature reservoir;
- arranging a heat reservoir at, in or near the fixed structure for storing heat, collected by the heat collector; and
- arranging a heat pump at, in or near the fixed structure for transferring heat from the low temperature reservoir to the heat reservoir.

Thus, the fixed structure can be renovated in a straight-forward manner, to become an energy harvesting structure, leading the above-mentioned advantages. Heat can harvested efficiently, be stored, and used in the fixed structure e.g. for room heating and/or tap water heating.

For example, efficiencies can range from about 40% when using a solar heat collector having an afore-mentioned colored NIR absorbing nanoparticle containing layer (NIR harvesting white), and may go over 100% (compared to solar input) at temperatures below outdoor temperatures.

Another aspect of the present invention, which can optionally be combined with one or more of the above aspects, there is provided the use of a heat collector, for example a solar heat collector, for example a heat collector of a system according to any of the preceding claims, the heat collector in particular being configured to be installed onto, in or near a fixed structure for collecting incoming heat, and preferably including:
- a heat collecting surface which is provided with a NIR (near-infrared) absorbing layer, for example a NIR absorbing coating, wherein the NIR absorbing coating preferably is a colored coating, wherein the heat collecting surface of the collector (1) is preferably a surface of a metal plate, e.g. an aluminum or copper plate;
- the heat collector also preferably including an integrated a cooling medium duct structure, that is substantially in direct contact with ambient air after mounting;
wherein the heat collector is used during a first time period for collecting heat, which heat is transferred to a heat reservoir,
wherein the heat collector is used as a heat reservoir cooling device during a second time period, which differs from said first time period, for transporting heat emanating from the heat reservoir, to ambient air, for example by circulating a heat transfer liquid between the heat collector and the heat reservoir.

In this way, during the first time period (e.g. in case of local heat demand), the heat collector can be used for collecting heat to bring and/or maintain the heat reservoir at a desired (relatively high) temperature. During the second time period, the heat collector's function can be reversed, wherein it becomes a cooling device for cooling the heat reservoir (e.g. for removing excess heat therefrom, thereby heating the heat collector to increase its temperature with respect to ambient air temperature). This can in particularly be advantageous during summer, wherein the heat reservoir can be cooled in a straightforward manner via heating the at least one heat collector e.g. during night time, to provide 'fresh' heat storage capacity during a subsequent day.

The heat collector can also be used, according to another aspect of the invention which may be combined with one or more of the above-mentioned aspects, as a cooling device for cooling at least one local area (e.g. interior space or room of the fixed structure).

According to this further aspect, there is provided use of a heat collector, for example a solar heat collector, for example a heat collector of a system according to the invention, the heat collector in particular being configured to be installed onto, in or near a fixed structure for collecting incoming heat, and preferably including:
- a heat collecting surface which is provided with a NIR (near-infrared) absorbing layer, for example a NIR absorbing coating, wherein the NIR absorbing coating preferably is a colored coating, wherein the heat collecting surface of the collector is preferably a surface of a metal plate, e.g. an aluminum (or copper) plate;
- the heat collector also preferably including an integrated a cooling medium duct structure, that is substantially in direct contact with ambient air after mounting;
wherein the heat collector is used during a first time period for collecting heat, which heat is transferred to a heat reservoir, wherein the heat collector is used with great advantage as a cooling device during a second time period, which differs from said first time period, for transporting heat emanating from an area that is remote from the heat collector (e.g. one or more interior rooms of a fixed structure), to the heat collector, in particular to be transferred by the heat collector to ambient air.

Advantageous aspects of the invention will be explained in the following, referring the drawings. Therein shows:
Figure 1 schematically an embodiment of a fixed structure, and part of an energy harvesting system;
Figure 2A shows a cross-section over line II-II of Fig 1;
Figure 2B shows a perspective back view of the heat collector of the energy harvesting system;
Figure 3 schematically a first embodiment of the energy harvesting of the embodiment of Fig. 1;
Figure 4 schematically a second embodiment of the energy harvesting of the embodiment of Fig. 1;
Figure 5 schematically a third embodiment of the energy harvesting of the embodiment of Fig. 1; and
Figure 6 schematically a fourth embodiment of the energy harvesting of the embodiment of Fig. 1.

Corresponding or similar features are denoted by corresponding or similar reference signs in this application.

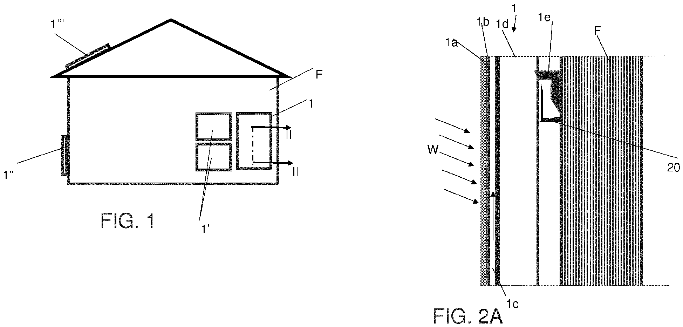

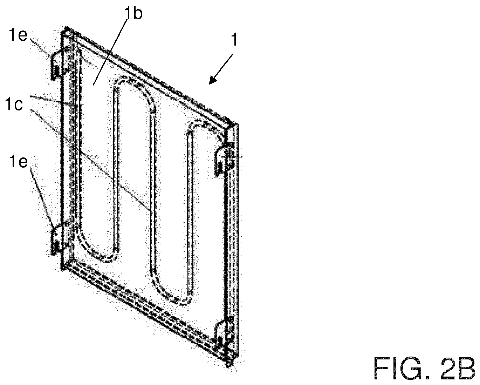

Figure 1 schematically depicts a fixed structure F, for example a building, in particular a house, having a number of walls and a roof. The fixed structure is provided with an energy harvesting system (see also Figures 2-3), including: at least one heat collector 1, e.g. solar collector, configured to be installed onto or near (or integrated in) a fixed structure for collecting incoming heat.

In this example, the energy harvesting system includes e.g. a number of heat collectors 1, 1' that are installed on side walls of the fixed structure F, and one or more heat collectors 1''' installed in/on a roof of the structure F. The various heat collectors 1, 1", 1''' can be interconnected via a duct system (not shown in Fig. 1) for conducting a cooling liquid to the heat collectors, as will be explained below.

Figures 2A, 2B show an example of the heat collector 1 of the system in more detail, in cross-section and perspective view respectively. In Figure 2A, arrows W indicate incoming heat, in particular solar heat and/or environmental heat. It is preferred that the heat collector 1 includes a heat collecting surface (for receiving said incoming heat W) which is provided with a NIR (near-infrared) absorbing layer 1a, for example a NIR absorbing coating, wherein the NIR absorbing coating preferably is a colored coating (e.g. paint). For example, the heat absorbing layer 1a can be applied onto a heat conducting material, for example a heat conducting support such as a metal (e.g. aluminum) plate 1b. Further, the heat collector 1 can include an integrated a cooling medium duct structure 1c for conducting a liquid cooling medium through the heat collector 1.

Further, it is preferred that the collector 1 includes a number of mounting structures 1e (e.g. clamping means, engagement means, suspension means) for mounting the heat collector 1 to the fixed structure F (e.g. via a respective receiving structure 20, configured to engage the heat collector mounting structure 1e).

Optionally, the heat collector 1 includes one or more further layers or structures, behind the integrated cooling medium duct structure 1c (e.g. embedding or thermally insulating that duct structure 1c). However, it is preferred that a space 1d behind the duct structure 1c (i.e. at a side faced away from the coating support layer 1a) is substantially an air space, filled or in direct contact with ambient air. Thus, preferably, part 1d in Fig. 2A is a substantially hollow (air filled) space of the heat collector 1, as also follows from Fig. 2B. In this way, improved heat transfer between ambient air and the heat collector 1 can be achieved, especially, in case of cooling the panel below ambient air temperature.

For example, according to a preferred embodiment, each heat collector 1 mainly consists of: the NIR absorbing coating/layer 1a, a respective support such as a metal or aluminum plate 1b and the cooling liquid duct structure 1c that is connected to the plate, and preferably with said mounting structure 1e but without dedicated thermal insulation.

In a further embodiment, the heat collector 1 can be a heat collecting panel, configured to be placed onto or in front of (i.e. externally) the fixed structure, or to be integral part of the fixed structure.

As is mentioned before, the one or more heat absorbing layer 1a preferably is a NIR absorbing layer that includes nanoparticles (in particular NIR absorbing nanoparticles). For example, use can made of NIR absorbing paint 1a applied on aluminum 1b. The NIR absorbing coating layer 1a enhances the heat (e.g.solar) input into the system, allowing the run the heatpump 5 (mentioned below) at a relatively high COP (coefficient of performance). Furthermore, the liquid duct 1c of the collector 1 can e.g. include tubing/tubes that is connected to the coating support 1b in various ways, e.g. via gluing which allows the tubing 1c to be mounted to the support 1b (e.g. a metal plates, without influencing the surface morphology of the support 1b. This improves aesthetic and workability.

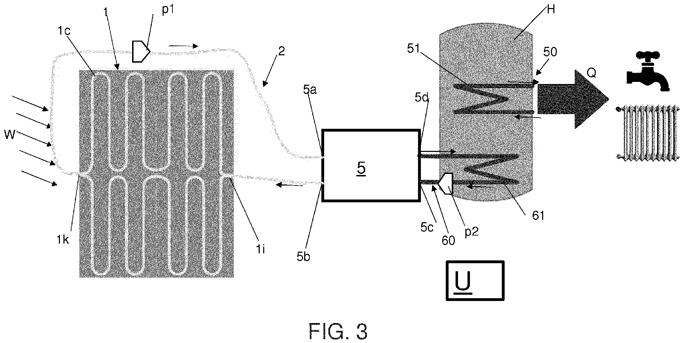

Figure 3 shows the energy harvesting system that is used in/at the fixed structure of Fig. 1, the energy harvesting system including the at least one heat collector 1. The liquid cooling medium duct structure 1c of the collector 1 is schematically depicted, wherein the collector 1 can include e.g. a number (e.g. four) interconnected collector sections having a common inlet 1i and outlet 1k of the common cooling medium ducts structure.

The energy harvesting system includes a heat reservoir H configured for storing heat. The heat reservoir H can be used to deliver heat to the fixed structure H, e.g. for tap water heating and/or interior space heating, as is indicated by arrow Q. To that aim, the heat reservoir H can be provided with a heat circulation circuit 50, including e.g. a heat exchanger 51 in the heat reservoir, as will be appreciated by the skilled person.

For example, the heat reservoir H can be a reservoir holding a heat storage medium (e.g. separate from the heating liquid). A volume of the heat storage medium reservoir can e.g. be at least 0.1 m³, for example a volume of at least 1 m³, preferable a volume in the range of about 1 - 10 m³.

Further, the system includes-a heat pump 5 configured for transferring heat from the at least one heat collector 1 to the heat reservoir H. To that aim, there can be provided a cooling medium duct structure 2 for circulating a liquid cooling medium between the at least one heat collector 1 and the heat pump 5. A first pump p1 is provided for circulating the cooling medium through the duct structure 2 (and at least one heat collector 1). At least part of the duct structure can be integrated with the heat collector.

In the present embodiment the heat pump 5 is a liquid to liquid (e.g. water to water) heat pump, in particular having cooling liquid entry port 5a and cooling liquid exit port 5b for receiving resp. discharging cooling liquid. Also, the heat pump 5 has a heating liquid entry port 5c (for receiving liquid to be heated) and a heating liquid exit port 5d for discharging the heating liquid back towards the heating medium reservoir H. In this non-limiting example, a heating liquid duct circuit 60 is provided, having a respective pump p2 for circulating the heating liquid and having a respective heat exchanger 61 in the heat reservoir H for delivery of heat to that reservoir (e.g. to a heat storing liquid held in that reservoir).

Moreover, the heat pump 5 as such is configured for transferring heat from the cooling liquid received via the cooling liquid entry port to the heating liquid received via the heating liquid entry port utilizing heat pump means, in particular an integrated compressor-condenser-evaporator system as well as integrated heat exchanger means for exchanging heat with each of the cooling liquid and the heating liquid (said specific heat pump components not being depicted as such in the drawings).). Further, the heat pump as such can include an integrated liquid flow pump (in addition to the system pump p1 or replacing that pump).

Also, the heating liquid and cooling liquid used can be water, or mainly consist of water. In a further embodiment, the heating liquid (held in the heating reservoir and circulated with the heat pump 5 to be heated thereby) is water. The cooling liquid (circulated between the heat collector 1 and the heat pump during operation) preferably consists of a mixture of water and at least one anti-freeze agent (for example glycol and/or a salt), allowing liquid temperatures below 0 °C (e.g. allowing the liquid to have a temperature of minus 10 degrees Celsius without freezing).

The system can include liquid pumps P1, P2 for pumping the liquids between the various components of the system, as will be appreciated by the skilled person. Liquid flow directions through the respective duct sections are indicated by arrows in the drawings. Also, it will be clear that the system can include a controller unit U, e.g. a microprocessor or computer, for controlling the liquid pumps P1, P2, the heat pump 5, e.g. depending on heat demand from the fixed structure and/or depending on a temperature of one or more of the liquids (heating liquid and cooling liquid) used. Sensor means can be installed (e.g. in a heat collector 1, in/on a liquid duct, in the heat pump 5 and/or on a liquid reservoir of the system) for detecting said liquid temperatures, as will be appreciated by the skilled person. Also, it will be clear that the controller unit U can be configured in various ways for controlling (e.g. activating and deactivating) system components, e.g. via wired and/or wireless communication means and respective controlling signals.

During use, the system of Figures 1-3 can carry out a method for energy harvesting wherein the first pump p1 circulates the liquid cooling medium with the heat collector 1, via the respective inlet/outlet ports 1i, 1k of the collector 1 and the inlet/outlet ports 5a, 5b of the heat pomp 5. The heat pump 5 is activated for actively cooling the cooling liquid, the cooled cooling liquid being discharged back towards the at least one heat collector 1 (providing cooling thereof).

Also, the heat pump 5 transfers the removed heat to the heating liquid which is circulated (by the respective second pump p2) with the heat reservoir H via the respective duct structure 60, the heat being transferred in (into) the heat reservoir H via the respective heat exchanger 61. The heat is stored in the heat reservoir H, to be used in the respective fixed structure F if desired/required a is described above.

For powering/energizing the heat pump 5 (in particular for powering a integrated compressor of the heat pump), usually, external energy, i.e. electric power, is required. It is preferred that power for powering the heat pump is green energy, e.g. electric power generated from wind and/or solar energy.

It has been found that in this way, by actively cooling the heat collector 1 and by utilizing a liquid-liquid heat pump, improved, more efficient heat harvesting can be achieved.

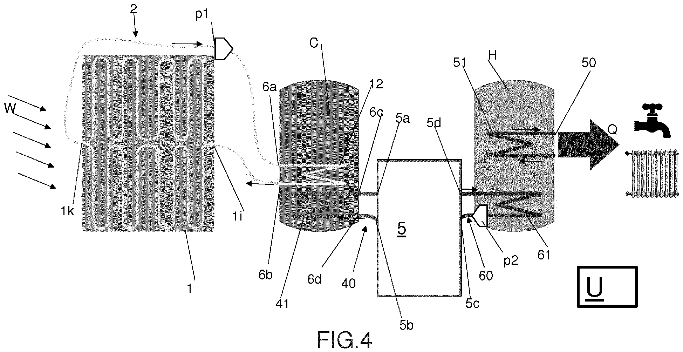

Figure 4 shows a further embodiment of an energy harvesting system, which differs from the example shown in Fig. 3 in that the system includes a low temperature reservoir C for a liquid cooling medium. In the present example, the liquid cooling medium is cooled by transferring heat therefrom to a cooled low temperature reservoir C, e.g. via a respective heat exchanger 12. Heat is removed from the low temperature reservoir C, by circulating a heat transfer liquid via a respective heat exchanger 41 and intermediate liquid duct circuit 40, with the heat pump 5 (and to heat the heating liquid). More particularly, as follows from the drawing, the cooling medium duct structure 2 for circulating cooling medium with the at least one heat collector 1 can be coupled to a liquid inlet 6a of the cooling medium reservoir to deliver cooling liquid thereto (i.e. to the respective heat exchanger 12). The cooling medium duct structure 2 can also be coupled to a liquid outlet 6b of the cooling medium reservoir to receive cooled cooling liquid therefrom (e.g. via/from the respective heat exchanger 12). In a preferred embodiment, at least part of the liquid cooling medium present in the low temperature reservoir C can change its phase as a result of the cooling, from liquid to solid (ice), depending e.g. on heat pump operation and heat input from the at least one heat collector.

Similarly, as follows from the drawing, the heat transfer liquid can be pumped from the respective outlet port 6a of the low temperature reservoir C via the respective transfer circuit 40 to the liquid inlet port 5a of the heat pump 5, to be cooled thereby. The cooled heat transfer liquid can be pumped back from the respective outlet port 5b of the heat pump 5 via the respective transfer circuit 40 back to the respective liquid inlet port 6b of the low temperature reservoir C for cooling that reservoir (e.g. via the respective heat exchanger 41). It is preferred that the low temperature reservoir C holds a buffer medium (for example separate from one or both of the cooling liquid and the heat transfer liquid), e.g. water or a mixture of water and an anti-freeze agent. In a preferred embodiment, the low temperature reservoir C has a buffer medium volume of at least 0.1 m³, for example a volume of at least 1 m³, e.g. a volume in the range of about 1 - 10 m³.

It should be noted that the low temperature reservoir may be configured to hold its liquid buffer medium separate from the cooling liquid that is circulated with the heat collector 1 (using a dedicated heat exchanger 12 for exchanging heat) but that is not required.

Also, it should be noted that the low temperature reservoir may be configured to holds its liquid buffer medium separate from the heat transfer liquid that is circulated with the heat pump 5 (using a dedicated heat exchanger 41 for exchanging heat) but that is not required.

In the present example, the liquid cooling medium is cooled by transferring heat therefrom to a cooled low temperature reservoir C, wherein heat is removed from the low temperature reservoir and transferred to the heat reservoir H in order to cool the low temperature reservoir C

Operation of the embodiment of Fig. 4 is similar to the operation of the example of Fig. 3, and utilizes a dedicated cooling reservoir C that is applied on the 'cold side' of the heat pump 5, and is also used for cooling the liquid that is circulated with the at least one heat collector 1. This provides a significant increase in system performance, COP.

By using a relatively large low temperature reservoir (e.g. buffer vessel), the system can still operate e.g. at days with low solar input. On those days the heat pump 5 can reduce the temperature of the buffer, which can be exchanged by the at least one collector 1 e.g. with the outdoor/ambient air.

Preferably, a cooling liquid is used having a liquid-solid (ice) phase change temperature between -10 °C and 0 °C, so that a relatively large enthalpy of the phase change can be used as storage in the low temperature reservoir. For example, during operation, part of the cooling liquid present in the low temperature reservoir can be ice (i.e. frozen liquid).

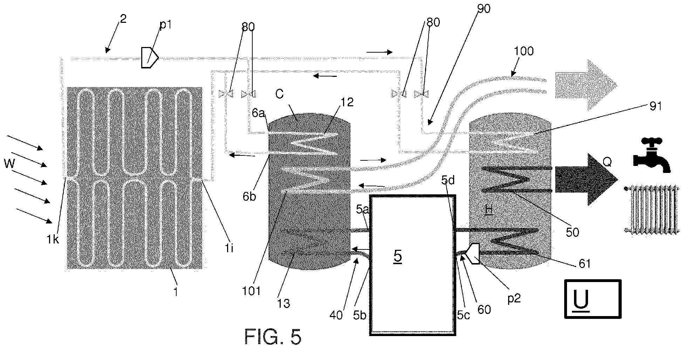

The example of Figure 5 differs from the embodiment shown in Fig. 4 in that the heat pump 5 includes or is connectable to a secondary cooling circuit 100 for cooling an area (e.g. a room or interior space of/in the fixed structure F) remote from the at least one heat collector 1. In particular, in this case, the cooling medium low temperature reservoir C acts as the connection between heat pump 5 and the secondary cooling circuit 100, via a respective secondary heat exchanger 101. For example, air can be circulated via that secondary cooling circuit, to be cooled in the low temperature reservoir C, wherein the cooled air can be transferred into an area of the fixed structure F to provide local cooling.

Alternatively, a secondary heat transfer liquid can be circulated via the secondary cooling circuit 100 to provide remote cooling.

In another alternative embodiment, the secondary cooling circuit 100 can be directly coupled to the heat pump 5 (i.e. not indirectly via the low temperature reservoir C) to receive cooled liquid directly from the heat pump 5 (to be used for remote cooling).

In another embodiment, that is not depicted, the secondary cooling circuit 100 can be directly connected to the at least one heat collector 1 (e.g. via suitable heat transfer ducts and valve means for controlling heat transfer liquid flow). In this way, the at least one heat collector 1 can be used as a cooling device, for cooling the local area in case of cooling demand (in particular in case the temperature in/of that area is higher than ambient temperature at the at least one heat collector 1). For example, a heat transfer liquid can be circulated via the secondary cooling circuit 100 and the at least one heat collector during night time. The heat collector 1 can provide good heat exchange with ambient air, allowing efficient cooling of the circulated liquid.

Moreover, the system, of Figure 5 includes a secondary heat transport medium duct structure 90 arranged for circulating a heat transport medium directly between the at least one heat collector 1 and the heat reservoir H, for example for heating the at least one heat collector 1 in order to cool the heat reservoir H. This secondary heat transport medium duct structure 90 can be implemented together with the secondary cooling circuit 100 (as in this example, or independent thereof.

For example, the secondary heat transport medium duct structure 90 can be connected to the inlet and outlet ports 1i, 1k of the at least one heat collector 1, the duct system can include valve means 80, which valve means can be controlled (e.g. by the control unit U) for changing liquid circulation from the heat collector 1 to the low temperature reservoir C on the on hand or directly to the heat reservoir H (via the secondary heat transport medium duct structure 90) on the other hand.. In this example, a secondary heat exchanger 91 is connected to the secondary heat transport medium duct structure 90, to exchange heat with the (interior of) the heat reservoir H.

Advantageously, during operation of the embodiment of Fig. 5, the at least one heat collector 1 can be used during a certain time period (e.g. when an environmental temperature is relatively low, e.g. lower than a temperature of/in the heat reservoir H, e.g. during the night) for cooling the heat reservoir H. In particular, this can be achieved by circulating the heat transport medium between the heat collector 1 and the (e.g. relatively hot) heat reservoir H, via the secondary duct structure, 90 bypassing the heat pump 5. In this way, heat can be transported from the heat reservoir to the at least one heat collector 1, to be given off to the environment (e.g. via heat radiation and/or convection towards the environment by the heat collector 1). This can in particular be advantageous during summer time, when the temperature of the heat reservoir H may rise to a relatively high temperature during daytime, wherein (e.g. excess) heat can be removed from the reservoir via the heat collector(s) 1 during night time.

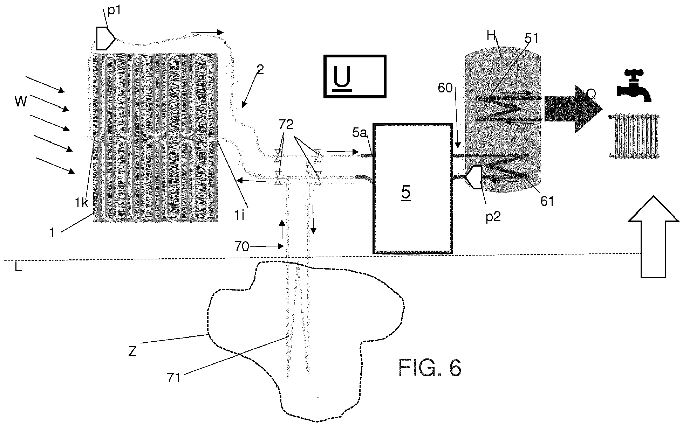

Figure 6 shows a further embodiment, which differs from the example of Figure 3 in that the system includes a heat transport circuit 70 for transporting heat -using a heat transfer liquid- during a first predetermined energy harvesting period, for example during summer, towards a subterranean heat reservoir Z. A ground surface level is schematically indicated by a dashed line L. The system can be configured to reduce or stop transporting heat via the heat transport circuit 70 to the heat reservoir during a second predetermined energy harvesting period, for example during winter. In this example, the liquid used in the same as the liquid that is circulated with the heat pump, 5.

For example, the heat transport circuit 70 can be connected to the inlet and outlet ports 1i, 1k of the at least one heat collector 1, wherein valve means 72 can be installed, which valve means 72 can be controlled (e.g. by the control unit U) for changing liquid circulation from the heat collector 1 to the subterranean heat reservoir Z on the on hand or directly to heat pump 5 on the other hand.. In this example, the heat transport circuit 70 can include a subterranean heat exchanger 71, to exchange heat with the subterranean reservoir Z

In this way, the energy harvesting system can be used for balancing the subterranean heat reservoir Z.

Besides, the subterranean reservoir Z can be connected to a further heat circulation system (not shown), that is separate from the energy harvesting system, which a further heat circulation system can be used for extracting heat from the reservoir in case of heat demand (e.g. from the same fixed structure F or another above-ground or surface structure).

In a preferred embodiment, for example, heat stored in the heat reservoir Z can be transported back (out of the reservoir) via the heat pump 5 itself, to be used in heating the heat reservoir H in case of heating demand (e.g. during winter).

To the skilled person it will be clear that the invention is not limited to the above-described embodiments. Various modifications are possible within the framework of the invention as is defined by the claims.

For example, the system can be configured such that in case of a low ambient temperature (e.g. during nighttime), in particular in case that temperature is lower than the temperature of the low temperature reservoir C, the low temperature reservoir C can simply be cooled by circulating the cooling liquid (via the duct system 2) with the at least one collector 1 without activating the heat pump 5.

Said heat reservoir H can be configured in various ways, e.g. including one or more vessels filled with (liquid) heat storage medium, and/or one or more ducts for conducting or circulating heat storage medium (e.g. tubing of a central heating system). Similarly, the cooling medium reservoir C can be configured in various ways, e.g. including one or more vessels or baths filled with (partly or entirely liquid) cooling medium.

Also, flows of liquid (e.g. heating liquid, cooling liquid, buffer liquid) can be achieved by various pumping means, and can be controlled by various valve means as will be clear to the skilled person.

Furthermore, it is preferred that the heat collector is not a photovoltaic collector, i.e., it does not include any solar cell means for generating electricity from sun light.

Besides, in a preferred embodiment, the at least one heat collector 1 is integrated in an external skin or a façade of a building, to be in direct contact with ambient air. The building can be any building, in particular a housing, industrial building or the-like.

Besides, the low temperature reservoir C for holding liquid cooling medium can include one or more liquid holding tanks, containers, pools or the like and/or for example be provided by liquid ducts as such for transferring the cooling medium. Preferably, a minimum volume of the (resulting) low temperature reservoir is 100 l.

## Claims

1. System for energy harvesting including:
- at least one heat collector (1), e.g. solar collector, configured to be installed onto, in or near a fixed structure for collecting incoming heat;
- a heat reservoir (H) configured for storing heat;
- a low temperature reservoir (C) for holding a liquid cooling medium,
- a heat pump (5) configured for transferring heat from the low temperature reservoir (C) to the heat reservoir (H); and
- a cooling medium transfer circuit (2) for circulating liquid cooling medium between the at least one heat collector (1) and the low temperature reservoir (C).

2. System according to claim 1, wherein the cooling medium transfer circuit includes a cooling medium duct structure (2) for circulating the liquid cooling medium between the at least one heat collector (1) and the low temperature reservoir (C).

3. System according to claim 1 or 2, the heat pump (5) being a liquid to liquid heat pump, in particular having cooling liquid entry and exit ports for receiving and discharging cooling liquid, and in particular having heating liquid entry and exit ports for receiving and discharging heating liquid, and in particular being configured for transferring heat from the cooling liquid received via the cooling liquid entry port to heating liquid received via the heating liquid entry port utilizing heat pump means, in particular an integrated compressor-condenser-evaporator system.

4. System according to any of the preceding claims, wherein the heat collector (1) includes a heat collecting surface which is provided with a NIR (near-infrared) absorbing layer, for example a NIR absorbing coating, wherein the NIR absorbing coating preferably is a colored coating, wherein the NIR absorbing coating preferably includes titanium dioxide as well as an NIR absorber, wherein the heat collecting surface of the collector (1) is preferably a surface of a metal plate, e.g. an aluminum or copper plate.

5. System according to any of the preceding claims, wherein the at least one heat collector (1) includes an integrated a cooling medium duct structure (1c), that is substantially in direct contact with ambient air after mounting.

6. System according to any of the preceding claims, including a secondary heat transport medium duct structure (90) arranged for circulating a heat transport medium between the at least one heat collector (1) and the heat reservoir (H), for example for heating the at least one heat collector in order to cool the heat reservoir (H).

7. System according to any of the preceding claims, wherein the low temperature reservoir (C) holds a liquid cooling medium including or consisting of water, for example a mixture of water and at least one anti-freeze agent (for example glycol and/or a salt), wherein the low temperature reservoir (C) preferably has a buffer medium volume of at least 0.1 m³, for example a volume of at least 1 m³, e.g. a volume in the range of about 1 - 10 m³.

8. System according to any of the preceding claims, wherein the heat reservoir (H) is a reservoir holding a heat storage medium, wherein preferably a volume of the heat storage medium reservoir is at least 0.1 m³, for example a volume of at least 1 m³, preferable a volume in the range of about 1 - 10 m³.

9. System according to any of the preceding claims, wherein the heat pump (5) and/or the at least one heat collector (1) includes or is connectable to a secondary cooling circuit (100) for cooling an area remote from the at least one heat collector (1).

10. System according to any of the preceding claims, including a heat transport circuit for transporting heat during a first predetermined energy harvesting period, for example during summer, towards a subterranean heat reservoir, wherein the system is configured to reduce or stop transporting heat via the heat transport circuit to the heat reservoir during a second predetermined energy harvesting period, for example during winter.

11. Use of a heat collector, for example a solar heat collector, for example a heat collector of a system according to any of the preceding claims, the heat collector (1) preferably including:
- a heat collecting surface which is provided with a NIR (near-infrared) absorbing layer, for example a NIR absorbing coating, wherein the NIR absorbing coating preferably is a colored coating, wherein the heat collecting surface of the collector (1) is preferably a surface of a metal plate, e.g. an aluminum or copper plate;
- the heat collector (1) also preferably including an integrated a cooling medium duct structure (1c), that is substantially in direct contact with ambient air after mounting;
wherein the heat collector (1) is used during a first time period for collecting heat, which heat is transferred to a heat reservoir (H),
wherein the heat collector (1) is used as a heat reservoir cooling device during a second time period, which differs from said first time period, for transporting heat emanating from the heat reservoir (H), to ambient air, for example by circulating a heat transfer liquid between the heat collector and the heat reservoir (H).

12. Use of a heat collector, for example a solar heat collector, for example a heat collector of a system according to any of the preceding claims 1-10, the heat collector (1) preferably including:
- a heat collecting surface which is provided with a NIR (near-infrared) absorbing layer, for example a NIR absorbing coating, wherein the NIR absorbing coating preferably is a colored coating, wherein the heat collecting surface of the collector (1) is preferably a surface of a metal plate, e.g. an aluminum or copper plate;
- the heat collector (1) also preferably including an integrated a cooling medium duct structure (1c), that is substantially in direct contact with ambient air after mounting;
wherein the heat collector (1) is used during a first time period for collecting heat, which heat is transferred to a heat reservoir (H),
wherein the heat collector (1) is used as a cooling device during a second time period, which differs from said first time period, for transporting heat emanating from an area that is remote from the heat collector, to the heat collector (1), in particular to be transferred by the heat collector (1) to ambient air.

13. Method for energy harvesting including:
- arranging at least one heat collector, e.g. solar heat collector, onto or in front of a fixed heat receiving structure;
- circulating a liquid cooling medium with the heat collector (1);
- actively cooling the liquid cooling medium by removing heat therefrom; and
- transporting and/or storing the removed heat in a heat reservoir (H). wherein preferably liquid to liquid heat pump is used.

14. Method according to claim 13, wherein the liquid cooling medium is cooled by transferring heat therefrom to a cooled low temperature reservoir (C), wherein heat is removed from the low temperature reservoir and transferred to the heat reservoir (H) in order to cool the low temperature reservoir (C).

15. Method for renovating a fixed structure, for example a building, for example utilizing a system according to any of claims 1-10, the method including:
arranging at least one heat collector (1), e.g. solar collector, onto, in or near the fixed structure for collecting incoming heat;
- arranging a low temperature reservoir (C) at, in or near the fixed structure, the low temperature reservoir holding a buffer medium;
- providing a heat transfer circuit (2) for transferring heat from the at least one heat collector (1) to the low temperature reservoir (C);
- arranging a heat reservoir (H) at, in or near the fixed structure for storing heat, collected by the heat collector; and
- arranging a heat pump at, in or near the fixed structure for transferring heat from the low temperature reservoir to the heat reservoir.
